# FASCICULE DE BREVET EUROPEEN

(11) **EP 1 632 598 B1**
(45) Date de publication et mention de la délivrance du brevet: **11.09.2013**
(21) Numéro de dépôt: 05291609.5
(22) Date de dépôt: 28.07.2005
(51) Int. Cl.: D06F 39/00, B01D 61/22, B01D 61/14

(54) **Procédé de réutilisation d'un liquide de lavage ou de rinçage dans une machine à laver, machine à laver et système de filtration associés**
Verfahren zur Wiederverwendung einer Wasch- oder Spülflüssigkeit in einer Wasch- oder Geschirrspülmaschine, Wasch- oder Geschirrspülmaschine und dazugehöriges Filtrationssystem
Method for reutilisation of wash or rinse water in a washing machine, washing machine and corresponding filtering system

(30) Priorité: 03.08.2004 FR 0408585
(43) Date de publication de la demande: 08.03.2006
(73) Titulaire: FAGORBRANDT SAS, 92500 Rueil Malmaison (FR)
(72) Inventeur: Tissot, Carène, 69007 Lyon (FR)
(74) Mandataire: Stankoff, Hélène

(56) Documents cités:
- EP-A1- 0 040 282
- EP-A1- 0 597 513
- DE-A1- 4 218 958
- DE-A1- 19 621 891
- FR-A3- 2 672 043
- US-A- 5 427 667
- US-A- 5 800 628
- US-B1- 6 195 825
- US-B1- 6 287 347
- PATENT ABSTRACTS OF JAPAN vol. 018, no. 334 (C-1216), 24 juin 1994 (1994-06-24) -& JP 06 079094 A (SHARP CORP), 22 mars 1994 (1994-03-22)
- PATENT ABSTRACTS OF JAPAN vol. 011, no. 060 (C-405), 24 février 1987 (1987-02-24) -& JP 61 220704 A (TDK CORP), 1 octobre 1986 (1986-10-01)

## Description

La présente invention concerne d'une part, un procédé de réutilisation d'un liquide de lavage ou de rinçage dans une machine à laver, et d'autre part, une machine à laver adaptée à mettre en oeuvre le procédé de réutilisation conforme à l'invention, et un système de filtration apte à être mis en oeuvre dans une telle machine à laver.

De manière générale, l'invention concerne les machines à laver le linge ou la vaisselle, et plus particulièrement les machines à usage domestique.

Actuellement, les cycles de lavage et de rinçage du linge dans les machines à laver sont optimisées en fonction de plusieurs paramètres, par exemple, la charge et / ou la quantité de lessive. Il y a en moyenne 2 à 4 bains de lavage et rinçage successifs suivant les cas.

Pour les lave-vaisselle, le rinçage est composé d'un bain de rinçage froid, puis d'un bain de rinçage chaud. Ainsi, le rinçage est réalisé par dilution successive des détergents et des saletés.

Chaque bain utilisé, soit lors des lavages, soit lors des rinçages, est rejeté à l'égout.

Bien que les quantités d'eau soient optimisées afin de réduire au mieux la consommation d'eau utilisée sans dégrader les performances de rinçage, chaque bain n'est cependant utilisé qu'une seule fois avant d'être rejeté à l'égout.

Dans l'état de la technique, en référence aux documents US2001/0027580 et US5,868,937, il est connu des procédés et dispositifs de filtrage en vue de la réutilisation d'un liquide sale après filtration. Selon ces procédés et dispositifs, une solution classique consiste, après une période de temps spécifique d'une phase de rinçage, à vider l'eau contenue dans la cuve de la machine à laver et à l'évacuer dans un réservoir. Cette eau stockée est ensuite filtrée à l'aide d'un dispositif de filtration. Durant cette phase de filtration, le cycle de rinçage est suspendu jusqu'au filtrage d'une quantité d'eau suffisante pour pouvoir exécuter une phase de rinçage suivante.

Après une étape de filtration au moyen d'une cartouche à membrane, l'eau est réintroduite dans la cuve en vue de son utilisation lors de la prochaine phase.

De tels procédés permettent uniquement, à la fin de chaque phase de rinçage de récupérer une partie de l'eau utilisée au bain précédent. Or chaque phase de rinçage nécessite la mise en oeuvre d'étapes de remplissage, vidange et essorage, ces étapes étant grandement consommatrices de temps et d'énergie et génératrices de surcoût de conception.

Il est également connu, en référence au document EP 0 597 513 ou DE 196 21 891, un procédé et dispositif de filtrage et réintroduction de l'eau filtrée. Pour cela, une partie de l'eau sale de chaque cycle de lavage est filtrée à l'aide de moyens de filtrage et est ensuite réintroduite dans le cycle de lavage.

Dans le document EP 0 597 513, la réintroduction est réalisée au niveau des bacs contenant le détergent utilisé pour le lavage afin d'empêcher le colmatage de détergent dans les bacs de détergent.

Un tel procédé permet la réutilisation de l'eau filtrée dans le cycle de lavage tout en nettoyant les bacs de détergent. L'eau non filtrée est réintroduite directement dans la cuve afin d'éviter que de l'eau reste au niveau du filtre.

Ainsi, le nombre de phases de rinçage, nécessitant la mise en oeuvre d'étapes de remplissage, vidange et essorage, reste élevé. Ainsi, la mise en oeuvre de ce procédé est grandement consommatrice de temps et d'énergie.

La présente invention a pour but de fournir un procédé de réutilisation du liquide de lavage ou de rinçage d'une machine à laver, une machine à laver et un système de filtration particulièrement adaptés à réaliser une économie d'eau importante lors d'un cycle de lavage ou de rinçage des lave-linge et lave-vaisselle en éliminant au fur et à mesure de l'exécution d'une phase de lavage ou rinçage, les éléments à extraire du linge ou de la vaisselle.

A cette fin, selon un premier aspect, la présente invention vise à fournir un procédé de réutilisation du liquide de lavage ou de rinçage dans une machine à laver, comprenant une cuve reliée à un circuit de filtration.

Ce procédé comporte les étapes suivantes exécutées en continu :
- évacuation d'une quantité partielle du liquide de la cuve dans le circuit de filtration lors d'une phase de lavage ou de rinçage,
- filtration d'une partie du liquide évacué au travers d'un système de filtration, et
- réintroduction du liquide filtré dans ladite cuve pendant ladite phase de lavage ou de rinçage.

Le procédé comprend une étape de recyclage du liquide évacué non filtré dans le circuit de filtration et une étape d'évacuation du liquide de lavage ou de rinçage lorsqu'une mesure représentative d'une concentration en saleté du liquide de lavage ou de rinçage atteint une valeur prédéterminée.

Compte tenu des caractéristiques ci-dessus, le procédé selon l'invention permet de filtrer en continu l'eau du bain de chaque phase de lavage ou rinçage et de réintroduire une quantité d'eau filtrée simultanément à l'exécution de la phase de lavage ou rinçage.

Le traitement de l'eau pendant chaque phase de lavage ou rinçage permet d'améliorer l'efficacité de cette phase, et ainsi de diminuer le nombre de bains nécessaires. Cette diminution du nombre des bains permet de réduire massivement la consommation en eau et entraîne également la diminution du nombre d'étapes de remplissage, de vidange et d'essorage, permettant de générer des économies de temps, d'énergie et de coût de conception.

On peut en outre diminuer la quantité d'eau nécessaire pour chaque bain.

De plus, on permet de favoriser la concentration des saletés dans le circuit de filtration en permettant au liquide non encore filtré de repasser dans le système de filtration.

Selon une autre caractéristique, la quantité partielle de liquide évacuée de la cuve est inférieure à la quantité de liquide contenue dans la cuve.

La phase de lavage ou de rinçage peut ainsi se poursuivre pendant la filtration du liquide évacué.

La présente invention vise également selon un second aspect à fournir une machine à laver comprenant une cuve reliée à un circuit de filtration et comprenant un moyen pour évacuer une quantité partielle du liquide de lavage ou de rinçage de la cuve dans le circuit de filtration lors d'une phase de lavage ou de rinçage, ledit circuit de filtration comprenant un système de filtration adapté à filtrer une partie du liquide, et un moyen de réintroduction du liquide filtré par ledit système de filtration dans la cuve pendant ladite phase de lavage ou de rinçage. Le circuit de filtration comprend une conduite de recyclage adaptée à réintroduire le liquide non filtré en amont du système de filtration et est relié à un dispositif de vidange de la machine à laver pour évacuer le liquide de lavage ou de rinçage lorsqu'une mesure représentative d'une concentration en saleté du liquide de lavage ou de rinçage atteint une valeur prédéterminée.

Conformément à un autre aspect de la machine à laver selon l'invention, le volume de liquide contenu dans la cuve est supérieur au volume de liquide contenu dans le circuit de filtration.

Les avantages et caractéristiques particulières propres à la machine à laver selon l'invention sont similaires à ceux exposés ci-dessus concernant le procédé conforme à l'invention.

Avantageusement, le système de filtration est un filtre à filtration tangentielle.

Selon cette caractéristique, le système de filtration ne subit qu'un encrassement limité.

D'autres caractéristiques et avantages de la présente invention apparaîtront plus clairement à la lecture de la description qui va suivre, faite en référence aux dessins annexés, sur lesquels :
la figure 1 est un schéma de principe du système selon l'invention ;
la figure 2 est une perspective d'un système de filtration ;
la figure 2A est une vue en coupe du système de filtration selon la figure 2 ;
la figure 3 montre l'évolution de la concentration des composés dans l'eau de rinçage en fonction du temps.

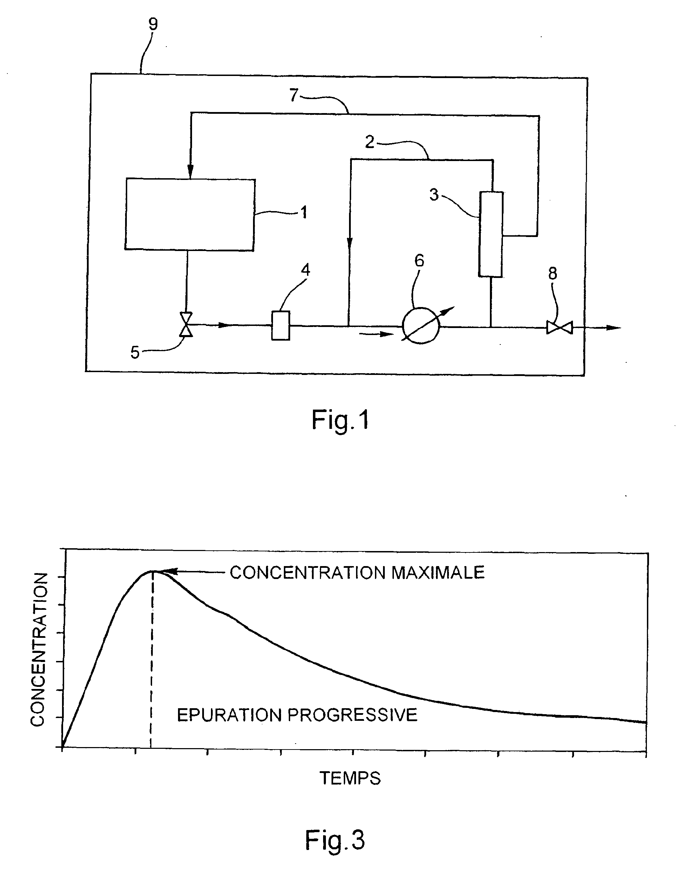

En référence à la figure 1, une forme de réalisation particulière du dispositif de réutilisation du liquide de lavage ou de rinçage dans une machine à laver 9 selon l'invention comprend essentiellement, une cuve 1, un circuit de filtration 2 muni d'un système de filtration 3 et un moyen de réintroduction du liquide filtré dans la cuve, ce moyen de réintroduction pouvant être un circuit de réapprovisionnement de la cuve 7.

L'invention consiste à épurer le liquide de lavage ou de rinçage contenu dans la cuve 1 au fur et à mesure de sa pollution. En effet, lors des phases de lavage et de rinçage, l'eau se charge de composés à éliminer, formant un liquide sale.

Ainsi, un liquide sale est défini comme de l'eau sale générée par les machines à laver, ou les lave-vaisselle. L'origine de ce liquide sale a pour conséquence qu'une proportion de ses constituants contient des détergents, par exemple des tensioactifs et des enzymes, des agents anti-calcaires de type zéolite, et des salissures de tout ordre, c'est-à-dire, des matières organiques, ou autres.

Selon un mode de réalisation particulier, le système selon la figure 1, se compose des éléments suivants. Tout d'abord, la cuve 1 de la machine à laver 9 comprend des éléments qui sont à nettoyer. La cuve comprend un volume d'eau entre 10 et 20 litres.

Ensuite, le système comprend un pré filtre frontal 4 qui se situe à l'entrée du circuit de filtration 2. Le rôle de ce pré filtre est d'éviter que les fibres et les particules non dissoutes et de tailles importantes viennent se colmater et boucher le système de filtration.

Le pré filtre peut être omis, cependant il présente l'avantage d'arrêter les particules à gros grains avant leurs entrée dans le circuit de filtration et donc dans le système de filtration.

Ce pré filtre peut, par exemple, empêcher le passage de particules et fibres de taille supérieure à 100 micromètres.

Le pré filtre doit être accessible par l'usager pour enlever périodiquement les particules et fibres accrochées à ce pré filtre.

Le système comprend une vanne 5 positionnée à la sortie de la cuve et en amont du circuit de filtration, qui évite que l'eau ne rentre dans le système de filtration lorsqu'on ne souhaite pas le faire fonctionner, en cours de lavage, de rinçage ou d'essorage.

Le circuit de filtration comprend notamment, une pompe d'alimentation et de circulation 6 ainsi qu'un système de filtration 3.

La pompe d'alimentation et de circulation 6 a pour rôle d'aspirer l'eau de la cuve et l'eau présente dans le circuit de filtration.

Quant au système de filtration 3, il filtre le liquide sale issue de la cuve. Il comprend principalement une membrane et un carter.

Selon un mode de réalisation particulier, le système de filtration est basé sur des techniques de filtration tangentielle. Ainsi, l'eau circule sur une surface, parallèlement à celle-ci et elle est filtrée en passant à travers cette surface. Ainsi, une partie des composés est retenue par cette surface, et donc ne la traverse pas. La surface de filtration est constituée par exemple, d'un filtre ou d'une membrane. Ces composés sont les détergents, les agents anti-calcaires et les salissures, principalement.

Selon un mode de réalisation préféré, le système de filtration est formé d'une membrane.

D'autres systèmes de filtration peuvent être utilisés, tel que par exemple une filtration frontale.

Cependant, il est préféré un système de filtration tangentielle pour les raisons suivantes. En effet, d'une part, l'utilisation d'un filtrage tangentielle limite l'encrassement du filtre. En effet, les composés ne sont pas stoppés devant le filtre et donc ne sont pas amenés à former une galette au niveau du filtre, la formation d'une telle galette de saleté nuisant au mécanisme de filtration.

D'autre part, l'utilisation d'un système de filtrage tangentielle ne nécessite pas de décrocher régulièrement et manuellement les saletés agglomérées sur la surface de filtration ou remplacer cette surface. En effet, la surface de filtration doit avoir une durée de vie équivalente à la durée de vie de la machine ce qui est rendu possible par l'utilisation d'un filtrage tangentielle.

De manière avantageuse, l'utilisation de la filtration membranaire tangentielle permet de réaliser de l'ultrafiltration. Ce type de filtration est particulièrement adapté pour épurer le bain et travailler avec des conditions opératoires adaptées, en limitant les surcoûts de conception. Ces surcoûts pourraient, notamment, être entraînés par la mise en place de mécanisme de pression dans le circuit.

Le circuit de filtration comprend en outre une conduite de recyclage adaptée à réintroduire le liquide non filtré par le système de filtration, en reliant la sortie du système de filtration à l'entrée du système de filtration. Ce liquide non filtré est appelé « rétentat ».

Pour de plus amples informations concernant les membranes de types ultrafiltration, le lecteur est renvoyé notamment à la référence suivante : US 6,287,347.

Selon cette approche, le système va retenir tous les composés qui ont une taille supérieure au seuil de filtration défini, aussi appelé seuil de coupure.

Préférentiellement, le seuil de coupure est de 15 kD, en sachant qu'un Dalton correspond à 1g/mol en taille moléculaire. Ainsi, le système de filtration ne laisse aucune particule de taille supérieure à 3 à 6 nm franchir la surface de filtration.

Une telle limitation équivaut à la rétention des sucres.

Il est également envisageable d'avoir des performances équivalentes en utilisant le même système mais en modifiant le seuil de coupure de la membrane. En effet, il est possible de travailler dans ce cas, selon un intervalle compris entre 1 kD et 500 kD.

Quant au circuit de filtration 2, ce dernier est de faible volume par rapport au volume de liquide contenu dans la cuve 1.

Préférentiellement, il est entre 10 et 40 fois inférieur au volume de liquide contenu dans la cuve. Par exemple, il comprend un volume entre 0,3 litre et 1 litre.

Selon un mode particulier, le circuit de filtration comprend donc une quantité partielle de l'eau contenue dans la cuve 1, dans laquelle va se concentrer les composés à éliminer au cours du lavage ou du rinçage.

Ce circuit de filtration est relié au dispositif de vidange 8 de la machine à laver pour évacuer le liquide concentré en saleté lorsque celle-ci atteint un niveau de concentration déterminé.

La mesure de concentration peut être effectuée à l'aide d'une sonde de mesure de conductivité d'un bain, préférentiellement située au sein de la cuve.

Enfin, le système de la figure 1 comprend un circuit de réapprovisionnement de la cuve de l'eau filtrée, appelée « perméat », ce circuit permet de réinjecter directement dans la cuve, l'eau une fois filtrée.

La réintroduction de l'eau au sein de la cuve peut être réalisée soit par la boîte à produit, soit au coeur du linge, soit à un point quelconque de la cuve.

Selon un mode de réalisation particulier, un réservoir temporaire peut être prévu entre le circuit de filtration et la cuve.

Selon le procédé de l'invention mis en oeuvre, par exemple, lors de la phase de rinçage, le procédé débute par une première étape d'introduction d'un volume d'eau défini au sein de la cuve.

Ce volume d'eau peut être fonction de la charge dans la cuve ou de la quantité de lessive.

Ensuite, un brassage du linge ou un cyclage de l'eau de rinçage au sein de la cuve est effectué respectivement dans une machine à laver et dans un lave-vaisselle.

En parallèle de ce brassage, une quantité partielle d'eau contenue dans la cuve est aspirée par la pompe d'alimentation et de circulation 6. Cette eau est amenée dans le circuit de filtration afin de subir un filtrage.

Cette eau traverse le circuit de filtration et au moins une partie du liquide traverse le système de filtration et aboutit dans le circuit de réapprovisionnement 7 de la cuve. Le liquide non filtré est de nouveau aspiré par la pompe d'alimentation et de circulation 6 afin d'effectuer un nouveau recyclage au sein du circuit de filtration par le biais d'une conduite de recyclage reliée en amont du système de filtration.

Une petite fraction de cette eau passe à travers le mécanisme de filtrage, le liquide résultant étant le perméat. En effet, tel que vu précédemment, le filtre membranaire ne laisse passer que l'eau assainie à travers son support.

Cette eau assainie est exemptée de composés de taille supérieure au seuil de coupure du système de filtration. Selon l'exemple de réalisation précédemment cité, le filtre membranaire ne laisse pas passer les composés de taille supérieure à 6 nm.

Ensuite, le perméat est réinjecté dans la cuve au moyen du circuit de réapprovisionnement 7. L'introduction d'une eau assainie au sein de la cuve contenant de l'eau de rinçage permet petit à petit de faire baisser la concentration du bain de rinçage en lessive et en saletés.

Les composés éliminés sont piégés dans la boucle du circuit de filtration. Au fil du temps, le rétentat est de plus en plus concentré en saletés. A compter d'un seuil de concentration, le rétentat ou le liquide contenu dans la machine à laver est vidangé.

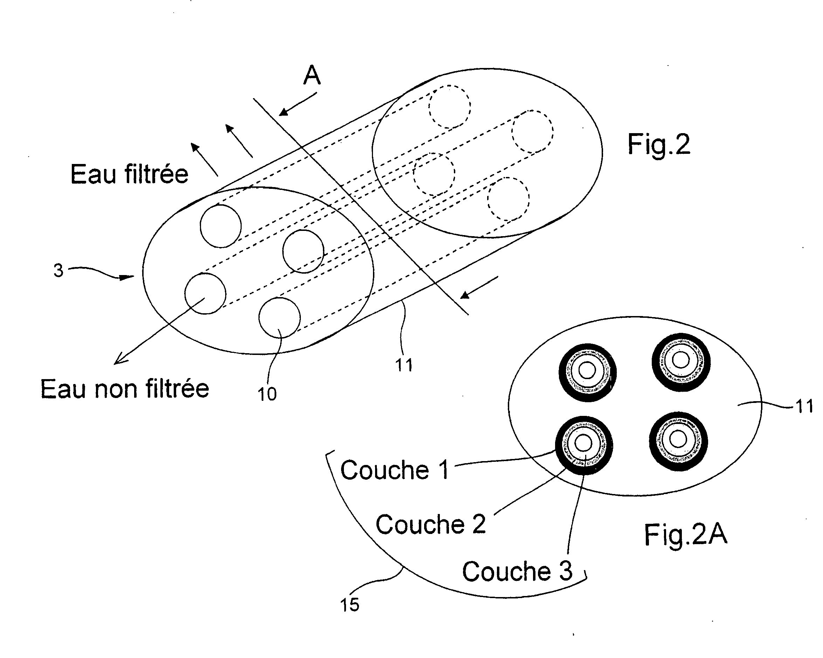

En référence à la figure 2 est présenté un système de filtration 3. Celui-ci est composé notamment de conduits 10 où l'eau à filtrer circule, d'une membrane comprenant un support 11 et un dépôt 15. Le support peut être de type minéral ou organique et le dépôt peut être réalisé en couches 15, tel que montré à la figure 2A, qui est une vue en coupe du système de filtration selon A. Le dépôt détermine le seuil de filtration. Ce dépôt peut également être soit minéral soit organique. Les couches formant le dépôt sont, par exemple, des couches successives ayant une granulométrie de plus en plus fine.

De plus, le système de filtration peut être composé d'une membrane intégrée dans un module hydraulique.

Selon le système de filtration présenté à la figure 2, le liquide sale est introduit dans les conduits 10 afin d'être filtré. Le liquide filtré est récupéré à l'extérieur du système 3 lorsque celui-ci traverse les couches 15 et le support 11, alors que le liquide non filtré sort à l'autre extrémité des conduits 10.

Selon un mode préféré de réalisation, le système de filtration est constitué d'une membrane minérale avec un support céramique. Cette membrane est composée de couches différentes d'oxydes. Ces oxydes peuvent être, par exemple, du zirconium ou du titane.

Un exemple de dimensions d'un tel système de filtration complet, c'est-à-dire incluant la membrane et le carter adapté, peut être de 25 cm de profondeur, de 8 cm de largeur et de 8 cm de longueur.

En référence à la figure 3, il est montré l'évolution de la concentration des composés dans l'eau de rinçage en fonction du temps.

Au début du rinçage du linge ou de la vaisselle, la concentration en composés augmente rapidement et devient très forte.

Le dimensionnement du système ne permet pas de traiter l'ensemble des composés à éliminer au fur et à mesure de leur dilution dans l'eau, appelé relargage. Ainsi il est observé ce phénomène d'augmentation rapide de la concentration de composés dans l'eau jusqu'à une concentration maximale dans l'eau de la cuve.

A partir de ce point, le système a une capacité de traitement équivalente au relargage.

Ensuite, le relargage des composés dans l'eau est moins rapide que la capacité de traitement de l'eau selon le procédé de l'invention, et l'eau est progressivement épurée.

Le traitement de l'eau peut être appliqué jusqu'à obtenir une concentration similaire entre le perméat en sortie du système de filtration et l'eau de la cuve.

Selon ce procédé, on obtient une réduction massive des consommations en eau par réduction des quantités d'eau par bain et par une diminution du nombre de bains. Cette diminution du nombre des bains entraînent également la suppression des phases de remplissage, de vidange et d'essorage, phases qui sont grandement consommatrices de temps, d'énergie et génératrices de surcoût de conception.

Selon une variante de réalisation, il est possible de réaliser la filtration en deux temps, afin d'améliorer l'efficacité du système de filtration.

Selon cette variante, le procédé de filtration et de réutilisation de l'eau de lavage ou de rinçage est actif pendant un temps donné, puis une vidange est effectuée, ainsi qu'un essorage intermédiaire. Ensuite, on remplit de nouveau la cuve avec une certaine quantité d'eau propre. Les étapes décrites sont réitérées.

Cette phase permet d'évacuer l'eau de la cuve et l'eau contenue dans le circuit de concentration. De l'eau du réseau est donc réintroduite dans cette phase.

Selon un mode de réalisation, les paramètres de fonctionnement déterminés pour avoir un bon compromis en termes d'efficacité du système sont les suivants.

La pression dans le système de filtration doit être inférieure à 1 bar, préférentiellement 0,6 bar.

Le débit du liquide dans le circuit de concentration peut être d'environ 18 litres par minute.

Enfin, le débit du perméat en retour dans la cuve peut être inférieur à 1 litre par minute, et préférentiellement de 0,4 litre par minute, cette valeur étant dépendante de la surface membranaire, des conditions de pression, de la géométrie du système de filtration et de la caractéristique des composants.

L'arrêt de la phase de filtration et réutilisation de l'eau est déterminé par l'un des paramètres suivants ou la combinaison de certains d'entre eux. Ces différents paramètres sont le débit et la pression du perméat, la conductivité du liquide dans le circuit de concentration et dans la cuve, et tout autre indicateur de la qualité de l'eau contenue dans la cuve.

Une mesure de conductivité dans la cuve permet de suivre en temps réel l'évolution de l'élimination de la lessive et des saletés présentes dans le liquide de la machine à laver. Elle permet aussi de servir d'alerte en cas de mauvais fonctionnement du système.

Lorsque la phase de filtration et réutilisation de l'eau est arrêtée, l'eau de la cuve est vidangée, puis le linge est essoré ou la vaisselle séchée. Cette eau vidangée peut être stockée dans un réservoir temporaire en vue d'être réutilisée au cours du lavage suivant.

Dans un but d'un entretien régulier et autonome du système de filtration, ce dernier et le circuit de filtration sont rincés régulièrement avec l'eau de la cuve en fin de cycle.

De manière préférentielle, une phase spécifique de lavage du circuit de filtration et du système de filtration est à réaliser périodiquement.

Bien entendu, la présente invention n'est nullement limitée aux modes de réalisation décrits et représentés, mais englobe, bien au contraire, toute variante à la portée de l'homme du métier et entre autre, l'utilisation d'un tel procédé et dispositif dans tout système utilisant de l'eau de réseau.

## Revendications

1. Procédé de réutilisation du liquide de lavage ou de rinçage dans une machine à laver (9) comprenant une cuve (1) reliée à un circuit de filtration (2), le procédé comprenant les étapes suivantes exécutées en continu :
- évacuation d'une quantité partielle du liquide de la cuve (1) dans le circuit de filtration (2) lors d'une phase de lavage ou de rinçage,
- filtration d'une partie du liquide évacué au travers d'un système de filtration (3), et
- réintroduction du liquide filtré dans ladite cuve (1) pendant ladite phase de lavage ou de rinçage, **caractérisé par** les étapes suivantes :
- recyclage du liquide évacué non filtré dans le circuit de filtration (2), le procédé comprenant, en outre, une étape d'évacuation du liquide de lavage ou de rinçage lorsqu'une mesure représentative d'une concentration en saleté du liquide de lavage ou de rinçage atteint une valeur prédéterminée.

2. Procédé de réutilisation selon la revendication 1, **caractérisé en ce que** ladite quantité partielle de liquide évacuée est inférieure à la quantité de liquide contenue dans la cuve (1).

3. Procédé de réutilisation selon la revendication 2, **caractérisé en ce que** ladite quantité partielle de liquide évacuée est entre 10 et 40 fois inférieure à la quantité de liquide contenue dans la cuve (1).

4. Machine à laver comprenant une cuve (1) reliée à un circuit de filtration (2), comprenant
- un moyen pour évacuer une quantité partielle du liquide de lavage ou de rinçage de la cuve (1) dans le circuit de filtration (2) lors d'une phase de lavage ou de rinçage, ledit circuit de filtration (2) comprenant un système de filtration (3) adapté à filtrer une partie du liquide, et
- un moyen de réintroduction (7) du liquide filtré par ledit système de filtration (3) dans la cuve pendant ladite phase de lavage ou de rinçage, **caractérisée en ce que** ledit circuit de filtration (2) comprend une conduite de recyclage adaptée à réintroduire le liquide non filtré en amont du système de filtration (3) et est relié à un dispositif de vidange (8) de la machine à laver pour évacuer le liquide de lavage ou de rinçage lorsqu'une mesure représentative d'une concentration en saleté du liquide de lavage ou de rinçage atteint une valeur prédéterminée.

5. Machine à laver selon la revendication 4, **caractérisée en ce que** le volume du liquide contenu dans la cuve (1) est supérieur au volume de liquide contenu dans le circuit de filtration (2).

6. Machine à laver selon la revendication 4 ou la revendication 5, **caractérisée en ce que** le système de filtration (3) est un filtre à filtration tangentielle.

7. Machine à laver selon l'une des revendications 4 à 6, **caractérisée en ce que** le système de filtration (3) est un filtre constitué d'un support (11) et d'au moins une couche filtrante (15) composée d'oxyde de minéral ou de composé organique.

8. Machine à laver selon l'une des revendications 4 à 7, **caractérisée en ce que** ledit système de filtration présente un seuil de coupure entre 1 kD et 500 kD.

9. Machine à laver selon la revendication 8, **caractérisée en ce que** le système de filtration présente un seuil de coupure de 15 kD.

10. Machine à laver selon l'une quelconque des revendications 4 à 9, **caractérisée en ce que** le système de filtration se compose d'un support céramique et d'au moins une couche d'oxyde minéral.

## Patentansprüche

1. Verfahren zur Wiederverwendung der Wasch- oder Spülflüssigkeit in einer Waschmaschine (9), die eine mit einem Filterkreislauf (2) verbundene Trommel (1) aufweist, wobei das Verfahren die folgenden kontinuierlich ausgeführten Schritte beinhaltet:
- Ablassen einer Teilmenge der Flüssigkeit der Trommel (1) in den Filterkreislauf (2) in einer Wasch- oder Spülphase,
- Filtern eines Teils der abgelassenen Flüssigkeit durch ein Filtersystem (3), und
- erneutes Einleiten der gefilterten Flüssigkeit in die Trommel (1) während der Wasch- oder Spülphase, **gekennzeichnet durch** die folgenden Schritte:
- Rezyklieren der ungefilterten abgelassenen Flüssigkeit in den Filterkreislauf (2), wobei das Verfahren darüber hinaus einen Schritt des Ablassens der Wasch- oder Spülflüssigkeit beinhaltet, wenn ein Messwert, der eine Verschmutzungskonzentration der Wasch- oder Spülflüssigkeit repräsentiert, einen vorbestimmten Wert erreicht.

2. Wiederverwendungsverfahren nach Anspruch 1, **dadurch gekennzeichnet, dass** die abgelassene Flüssigkeitsteilmenge geringer ist als die in der Trommel (1) enthaltene Flüssigkeitsmenge.

3. Wiederverwendungsverfahren nach Anspruch 2, **dadurch gekennzeichnet, dass** die abgelassene Flüssigkeitsteilmenge 10 bis 40 Mal geringer ist als die in der Trommel (1) enthaltene Flüssigkeitsmenge.

4. Waschmaschine mit einer mit einem Filterkreislauf (2) verbundenen Trommel (1), die Folgendes aufweist:
- ein Mittel zum Ablassen einer Teilmenge der Wasch- oder Spülflüssigkeit der Trommel (1) in den Filterkreislauf (2) in einer Wasch- oder Spülphase, wobei der Filterkreislauf (2) ein Filtersystem (3) zum Filtern eines Teils der Flüssigkeit umfasst, und
- ein Mittel zum Wiedereinleiten (7) der von dem Filtersystem (3) gefilterten Flüssigkeit in die Trommel während der Wasch- oder Spülphase, **dadurch gekennzeichnet, dass** der Filterkreislauf (2) eine Rezyklierungsleitung umfasst, die zum Wiedereinleiten der nicht gefilterten Flüssigkeit stromaufwärts des Filtersystems (3) geeignet ist und mit einer Abpumpvorrichtung (8) der Waschmaschine verbunden ist, um die Wasch- oder Spülflüssigkeit abzulassen, wenn ein Messwert, der eine Verschmutzungskonzentration der Wasch- oder Spülflüssigkeit repräsentiert, einen vorbestimmten Wert erreicht.

5. Waschmaschine nach Anspruch 4, **dadurch gekennzeichnet, dass** das Volumen der in der Trommel (1) enthaltenen Flüssigkeit größer ist als das im Filterkreislauf (2) enthaltene Flüssigkeitsvolumen.

6. Waschmaschine nach Anspruch 4 oder Anspruch 5, **dadurch gekennzeichnet, dass** das Filtersystem (3) ein Tangentialfilter ist.

7. Waschmaschine nach einem der Ansprüche 4 bis 6, **dadurch gekennzeichnet, dass** das Filtersystem (3) ein Filter ist, der von einem Träger (11) und wenigstens einer Filterschicht (15) gebildet wird, die sich aus Mineraloxid oder einer organischen Verbindung zusammensetzt.

8. Waschmaschine nach einem der Ansprüche 4 bis 7, **dadurch gekennzeichnet, dass** das Filtersystem einen Grenzpunkt zwischen 1 kD und 500 kD hat.

9. Waschmaschine nach Anspruch 8, **dadurch gekennzeichnet, dass** das Filtersystem einen Grenzpunkt bei 15 kD hat.

10. Waschmaschine nach einem der Ansprüche 4 bis 9, **dadurch gekennzeichnet, dass** sich das Filtersystem aus einem keramischen Träger und wenigstens einer Mineraloxidschicht zusammensetzt.

## Claims

1. Method for the reuse of the washing or rinsing liquid in a washing machine (9) comprising a tank (1) connected to a filtration circuit (2), the method comprising the following steps executed continuously:
- discharging a partial quantity of the liquid in the tank (1) into the filtration circuit (2) during a washing or rinsing phase,
- filtration of part of the discharged liquid through a filtration system (3), and
- reintroduction of the filtered liquid into said tank (1) during said washing or rinsing phase,
**characterised by** the following steps:
- recycling of the non-filtered discharged liquid in the filtration circuit (2), the method furthermore comprising a step of discharging the washing or rinsing liquid when a measurement representing a concentration of dirt in the washing or rinsing liquid reaches a predetermined value.

2. Reuse method according to claim 1, **characterised in that** said partial quantity of discharged liquid is less than the quantity of liquid contained in the tank (1).

3. Reuse method according to claim 2, **characterised in that** said partial quantity of discharged liquid is between ten and forty times less than the quantity of liquid contained in the tank (1).

4. Washing machine comprising a tank (1) connected to a filtration circuit (2), comprising
- a means for discharging a partial quantity of the washing or rinsing liquid from the tank (1) into the filtration circuit (2) during a washing or rinsing phase, said filtration circuit (2) comprising a filtration system (3) adapted to filter part of the liquid, and
- a means (7) for reintroducing the liquid filtered by said filtration system (3) into the tank during the washing or rinsing phase,
**characterised in that** said filtration circuit (2) comprises a recycling pipe adapted to reintroduce the non-filtered liquid upstream of the filtration system (3) and is connected to a device (8) for emptying the washing machine in order to discharge the washing or rinsing liquid when a measurement representing a concentration of dirt in the washing or rinsing liquid reaches a predetermined value.

5. Washing machine according to claim 4, **characterised in that** the volume of liquid contained in the tank (1) is greater than the volume of liquid contained in the filtration circuit (2).

6. Washing machine according to claim 4 or claim 5, **characterised in that** the filtration system (3) is a tangential-filtration filter.

7. Washing machine according to one of claims 4 to 6, **characterised in that** the filtration system (3) is a filter consisting of a support (11) and at least one filtration layer (15) composed of mineral oxide or organic compound.

8. Washing machine according to one of claims 4 to 7, **characterised in that** said filtration system has a cutoff threshold of between 1 kD and 500 kD.

9. Washing machine according to claim 8, **characterised in that** the filtration system has a cutoff threshold of 15 kD.

10. Washing machine according to any one of claims 4 to 9, **characterised in that** the filtration system is composed of a ceramic support and at least one layer of mineral oxide.
